# EUROPEAN PATENT APPLICATION

(11) **EP 0 676 712 A2**
(43) Date of publication of application: **11.10.1995**
(21) Application number: 95301614.4
(22) Date of filing: 13.03.1995
(51) Int. Cl.: G06K 7/10

(54) **Laser scanners**

(30) Priority: 14.03.1994 GB 9404921
(71) Applicant: OPTICON SENSORS EUROPE B.V., NL-2132 NG Hoofddorp (NL)
(72) Inventor: Peng, Ke-Ou, NL-2612 KV Delft (NL)
(74) Representative: Tribe, Thomas Geoffrey

(57) **Abstract**

A bar code reader using a laser beam in conjunction with a rotary multifacet mirror or an oscillating mirror in which the beam is separated by two or more mirrors, or equivalent, into two or more beams, and the separated beams are combined by one or mirrors, or equivalent so as to appear at the bar code region as a plurality of lines. The lines can be parallel and closely spaced or they can cross, or they can rotate to provide detection of a random by orientated bar code. The invention enables the scanning frequency to be multiplied in dependence on the number of lines, or enables the beam to rotate so as to be able to detect randomly orientated bar codes.

## Description

### BACKGROUND OF THE INVENTION

The invention relates to bar code readers using laser scanning systems.

Because of the need for a large longitudinal reading range with high spatial resolution, bar code readers using laser beams have been widely applied. In the simplest form these bar code scanners generate a single scanning line to cross a bar code. In European Patent Application 0 378 199A, a typical bar code scanner is described, which uses a rotation polygon to generate a single scanning line. Instead of a polygon, a mirror driven by an oscillation motor can also be used, which is typically described in United State Patent 5,075,538.

The scanning frequency, i.e. the number of the scanning lines in unit time, is required to be high if the bar code reader is applied in, for instance, an environment where fast automatic reading is required. To increase the scanning frequency the frequency of the driver has to be increased. For a scanner using a rotation polygon, this increase can be obtained by increasing the number of facets of the polygon, however there are problems in such an approach.

The present invention, aims to provide a bar code reader, by which the scanning frequency can be increased without changing the frequency of the driver or polygon. It then provides a simple way of increasing the reading frequency compared with conventional one-dimensional bar code readers.

Now it is known to provide a scanner where the number of lines is multiplied, for example as is shown in GB 2,255,650A, however, this lacks control of the individual lines and cannot usually be used at varying distances.

A principal object therefore is to provide a scanner where this problem is overcome. A further problem is that often the bar code to be read is situated at an arbitrary position with an arbitrary orientation. To read this bar code, at least one scanning line must cross over it. For convenience, a scanning pattern consisting of a number of lines which are orientated at various direction, is required. The present invention aims to provide a design which can be adapted to solve this problem in addition to or in substitution for solving the frequency problem.

Consequently, the objects of the present invention are
1) to present a simple device to increase the scanning frequency; or
2) to present a simple device to generate a space-invariant scanning pattern; or
3) to present a device which can solve both of these problems.

### SUMMARY OF INVENTION

The scanning of the laser from the rotation polygon or oscillation mirror forms a scanning surface, which, in general, is in a fan-shaped plane. The scanning field is defined by the scanning rays with the maximum scanning angle.

When the incident laser beam is normal to the rotation axis, the reflected beam will be reflected by an angle equal to twice that of the rotation angle of this mirror. For example, a rotation polygon may have 10 facets. The rotation angle, corresponding to a facet is 36°, and the maximum scanning field is about ± 36° (72°). This scanning angle may be too large for some applications, especially for long range reading, where the scanning field is in practice required to be less than ± 20° (40°). The scanning efficiency is then only about 50%.

In contrast, the scanning frequency is sometimes required to be large so that a moving bar code can also be read. In other cases, to increase the opportunity of reading a bar code, more than one scanning direction is required.

In order to increase the scanning frequency or the number of the scanning directions, we therefore, separate the scanning field into several parts, and then these parts are overlapped together.

Accordingly the invention provides a bar coder reader that is arranged to generate a plurality of spaced scanning lines on a bar code region where a bar code is to be detected and decoded comprising light source and collimation means for provision of a collimated light beam, scan beam deflection means for deflection of the light beam to form a scanning beam at the bar code region, and dispersion means for causing the beam to fall on said bar code region as a plurality of lines, characterised in that the beam dispersion means comprises at least two separation beam deflection devices which are arranged to deflect the beam as it emerges from said scan beam deflection means as discrete separated beams, and at least one combiner beam deflection device which is arranged to combine the separated beams on the bar code region.

The beam deflection devices will usually be mirrors but other equivalent optical devices can be used, and usually there will be two for separating the beam in two, but more than two is also possible.

The scanning field is then decreased but the scanning frequency is increased. In the previously discussed example of the 10 facet mirror, the scanning field can be separated into two parts, which are overlapped over each other. The scanning field becomes ± 18° (40°), while the scanning frequency is doubled. To obtain the symmetrical sub-fields, the center of the two optical components is then at ± 18° with respect to the symmetrical axis of the main field.

The present invention thus provides a device that can be used to increase the scanning frequency or scanning directions without increasing the speed of driver. This device generally includes a field separator and combiner, and the field separator uses a separate mirror or equivalent device for each separated beam. Using a separate mirror or equivalent device for each separated beam has the advantage that the spacing and orientation of the combined beams can be controlled, and also that the output is usually space invariate.

The scanning field from the scanning device such as polygon and oscillation mirror is referred to herein as the main scanning field. By means of the field separator, the main scanning field is separated into, at least, two parts which may be directed to different directions. These separated parts of field are called here subfields. The combiner is used to project the sub-fields into a single direction. It is most preferred that the symmetrical axes of the sub-fields from the scanner are parallel to each other or, preferably coincident.

The beam deflection devices in the separator may be in the form of at least two reflective, refractive or diffractive optical components, such as mirrors, prisms or holographic optical components. The combiner beam deflection device may also be in the form of reflective, refractive or diffractive optical components, but in each case mirrors are a particularly simple and convenient expedient.

The separated sub-fields are reflected by their corresponding reflective optical components, such as mirrors, to the combiner into different angles of elevation. The incident points on the optical components in the combiner will be different heights with respect to the main scanning fan. These points are most preferred to be in the plane, containing the symmetrical axis of the main scanning field. Accordingly the mirrors in the combiner are located at different incident heights. These mirrors are most preferred to be orientated such that after reflection from them, the sub-fields are parallel to each other. The scanning lines are then parallel to each other. The distance between them depends on the distance of the angle of elevation of the reflected beam from the mirrors of the separator. The larger this angle is, the larger the angle between the lines is.

To minimize the number of the optical components, only a single deflective optical component, such as mirror, which is normal to the symmetrical axis of the main field, can be used. To reflect the sub-fields into a single direction, after deflection by the optical components in the separator, the symmetrical axes of the sub-fields are parallel to each other and after reflecting by the mirror in the combiner, these two axes are distanced and parallel to the symmetrical axis of the main field. The distance between them depends on the position and the orientation of the mirrors in the separator.

The scanning lines, generated by this device, in the reading plane are, in general, not parallel to each other. The angle between them depends on the angle of elevation of the axes of the sub-fields from the mirrors in the separator. The larger this angle is, the larger the angle between the lines is. This then allows a multiple-directional scanning pattern to be generated.

To generate scanning lines, which are overlapped over each other, a mirror pair can be used instead of a single mirror. This pair consists of two mirrors which are perpendicular to each other. When the beam is incident on one of the mirrors in this pair, it will be reflected by another mirror to the direction, opposite to the incident direction, with a certain spacing. When the pairs in the separator are parallel to then main field, the sub-fields, reflected by them, will be parallel to the main field with a certain spacing. Reflected by the mirror pair in the combiner, while parallel to the main field as well, the sub-fields will be overlapped over each other with their symmetrical axes separated from each other.

The above mentioned pairs of mirrors can also produce scanning lines with a selected cross-angle between scanning lines. When the pairs of mirrors in the separators are turned in the plane normal to the reflected symmetrical axes of the sub-fields, the scanning planes to bar code will be rotated. This means that the scanning line will be rotated when the mirror pairs are rotated. When the pairs of mirrors turn continuously with a speed much lower then the scanning speed, a multiple-directional scanning pattern is generated.

The multiple-directional scanning pattern can also be generated by turning the mirror pair in the combiner.

The following is a description of a number of embodiments of the invention, which are described by way of example with reference to the accompanying diagrammatic drawings.

### DRAWINGS AND DESCRIPTION

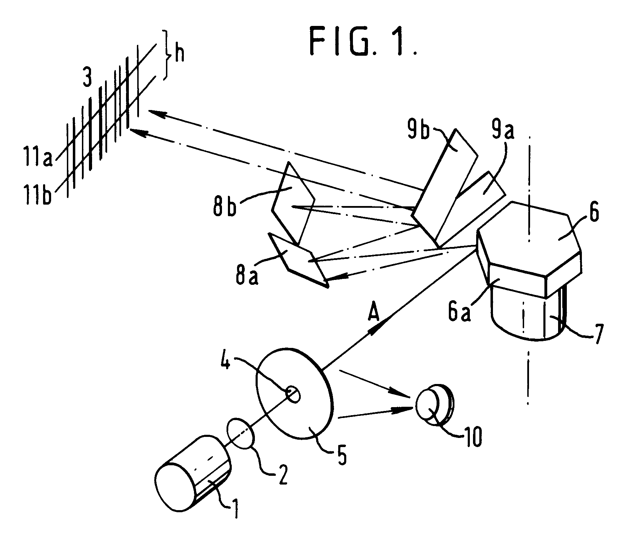

Fig. 1 shows a typical scanner containing a field separator and combiner which can increase the scanning frequency.

Two scanning lines are produced which correspond to a single scanning line from the facets of a rotary polygon.

The beam A from source 1 such as a laser diode is focused by the focusing means 2 on to the bar code 3. Through the small opening 4 of the light collector 5, this focusing beam A is incident on rotation polygon 6, driven by motor 7 to scan a field (plane), called a main scanning field. The facets 6a, 6b... of the polygon are substantially parallel to the rotation axis of the polygon and the incident beam A is normal to this axis. In this case the scanning surface is planar. The main field is then separated by two mirrors 8a and 8b in the separator 8 into two parts. From the mirrors in the separator 8, the two parts are reflected by the mirrors 9a and 9b in a combiner 9 to the direction along the symmetrical axis of the main field. The light scattering from the bar code 3 will be directed back to the scanner. Passing back via the mirrors 9 and 8 as well as the rotation polygon 6, the light is collected by the light collector 5 and directed to the sensor 10.

To produce two parallel scanning lines 11a and 11b with a constant distance, h, along the reading distance, the mirrors 8a and 9a are orientated such that, after reflection by them, the symmetrical axis of one of the parts of the scanning field is along the symmetrical axis of the main field, while the mirrors 8b and 9b are orientated such that, after reflection by them, the symmetrical axis of the other part of field is along the same axis. The distance between the scanning lines depends on the incident height of the scanning ray on the mirror 9.

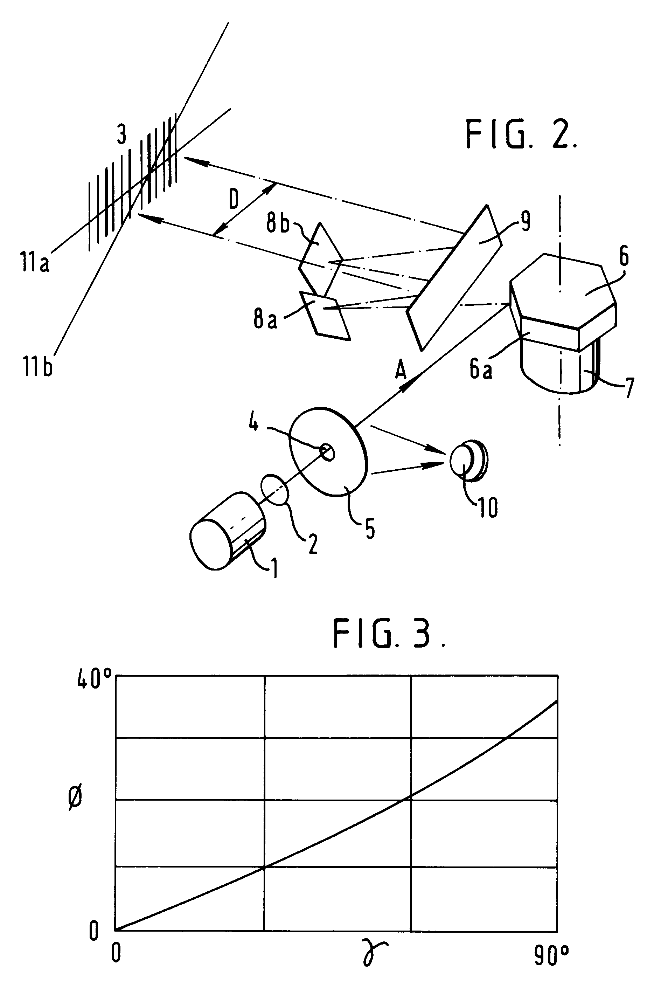

To obtain two crossed scanning lines with less optical components, only a single mirror should be used in the combiner. Fig. 2 shows the bar code reader having three mirrors to form two crossing scanning lines. The beam A from source 1 such as laser diode is focused by the focusing means 2 to the bar code 3. Through the small opening 4 of the light collector 5, this focusing beam A is incident on rotation polygon 6, driven by motor 7 to scan a scanning fan (main scanning field). The main scanning field is then separated by two mirrors 8a and 8b in the separator 8 to be two parts, directed to the mirror 9 as the combiner. Reflected by it, these two subfields are projected into the direction along the symmetrical axis of the main field.

The mirror 8a and 8b are most preferred to be orientated such that, after reflection by them, two symmetrical axes of the reflected separated field are parallel to each other and the mirror 9 is orientated such that after reflecting by it, these parallel symmetrical axes are along the symmetrical axis of the main field.

With this scanner the two crossing scanning line lla and 11b are formed. The light scattering from the bar code will be directed back to the scanner and be detected.

The distance between the symmetrical axes of the subfields depends on the distance of the incident point on the polygon to the mirrors in the separator. To obtain a better symmetry of the two scanning lines, this distance should be as small as possible. The cross-angle between the two scanning lines depends on the angle of elevation of mirrors 8. It will increases with the increasing angle of elevation. The curve in Fig. 3 shows the crossing angle (φ) with varying tilting angle of the mirror (γ) in the separator for the scanner having field ± 36°.

When transmittance holographic optical components are used, the mirrors 8a and 8b as well as 9 can be replaced by two holographic optical components.

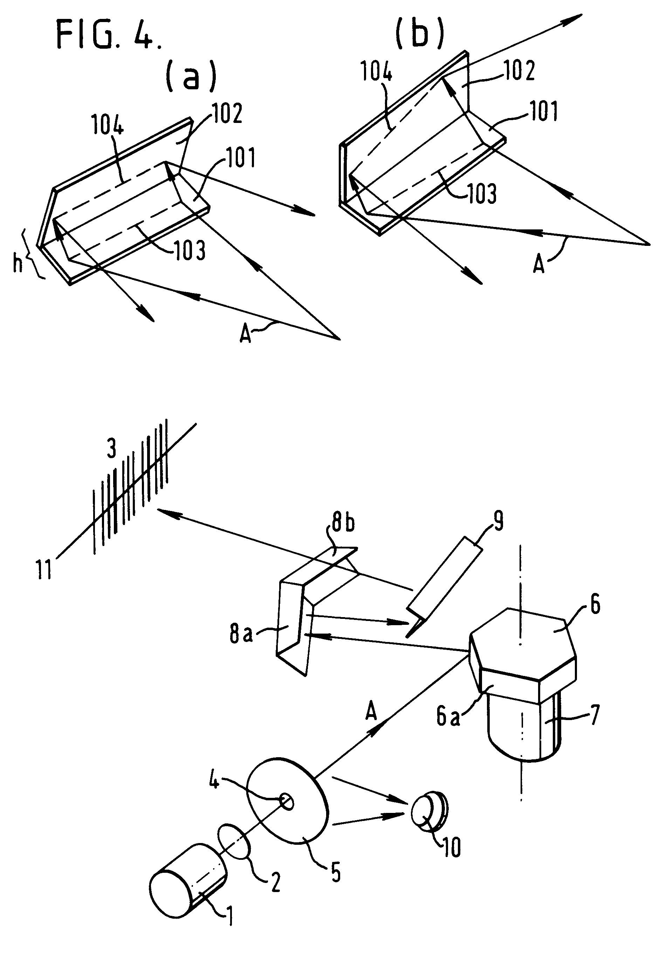

Fig. 4 shows a further embodiment of a bar code reader, in this case generating two parallel or coincident scanning lines. In this scanner, three pairs of mirrors are used. As shown in Fig. 4a, two mirrors 101 and 102 in the pair are perpendicular to each other. The laser beam A is incident to the mirror 101 and scans a line 103 in this plane. When the line 103 is parallel to the intersection line of the two mirrors, this line will be projected to the mirror 102 to form a scanning line 104, which is parallel to the line 103. Reflected by this mirror 103, the emerging scanning plane will be parallel to the incident scanning plane while spaced by a distance h. Their propagation directions are opposite to each other.

The beam A from source 1 such as laser diode is focused by the focusing means 2 on to the bar code 3. Through the small opening 4 of the light collector 5, this focusing beam A is incident on rotation polygon 6, driven by motor 7 to scan the main field. The main field is then separated by two pairs of mirrors 8a and 8b into two parts. Reflected by them, these two parts, parallel to the main field, are directed to the pair 9 of the combiner with a shifted distance. One of the mirrors in the pair 9 faces a mirror in the separator, from which the scanning beam emerges. Reflected by the two mirrors in pair 9, the two parts are directed to the bar code 3.

The light scattering from the bar code 3 will returned back to the scanner. The light passes via the pairs 8 and 9 as well as the rotation polygon, and is collected by the light collector 5 and directed to the sensor 10.

When the pairs of mirrors, 8a and 8b, as well as 9 are parallel to the scanning plane A, after reflection by them, the separated sub-fields are parallel to each other. Further, if the pair of mirrors 8a and 8b are identical, the two lines overlap each other. The pairs 8a and 8b are most preferred to be orientated in the plane parallel to the main field such that after reflection by them, the symmetrical axes of the two subfields are parallel to the symmetrical axis of the main field.

To obtain a better symmetry of the two scanning lines, the distance between the incident point on the polygon and the pairs of mirror 8 should be as small as possible.

As shown in Fig. 4b, when the cross-line of the mirror 101 and 102 is not parallel to the incident scanning plane, the reflected scanning plane from the mirror 102 will also be not parallel to it. We now turn the pairs of mirrors 8a and 8b in two opposite directions such that they are not parallel to the main field. In this case, the two scanning lines will be tilted in two opposite directions. The cross-angle between these two lines depends on the turning angle.

In the above-mentioned scanners, instead of a rotation polygon, an oscillation mirror can also be used.

The scanner in Fig. 4 can be modified to generate a space-invariant multiple-directional scanning pattern.

In the first embodiment, the pair of mirrors, 9, is placed to be normal to the symmetrical axis of the main field. This pair can be turned in the plane around the axis, parallel to the symmetrical axis of the main field and passing the mid-point of the intersection points of the symmetrical axes in the incident mirror in this pair. During scanning, the pair turns with relatively slow speed as compared with the rotation speed, and so a multiple-directional pattern can be formed.

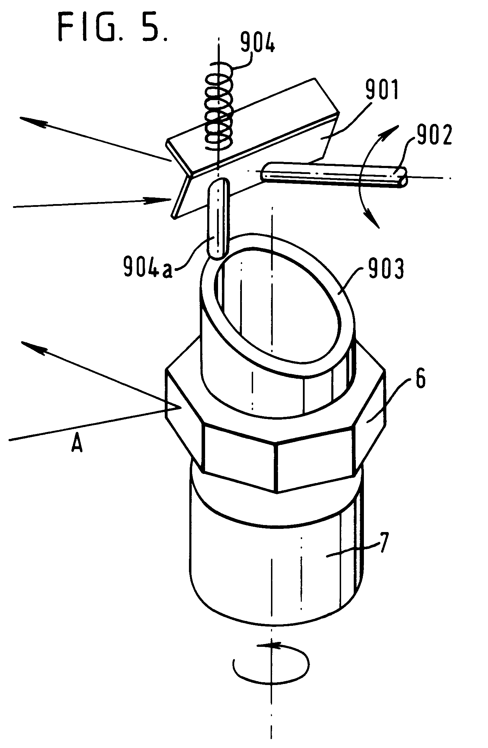

To turn this mirror pair, a driving device has to be used. Fig. 5 shows a mechanical coupling device. At the centre of the incident mirror 901 in the mirror pair 9, a shaft 902 is fixed such that it is parallel to the symmetrical axis of the main field. The pair 9 can rotate around the shaft axis. The cam 903 is fixed to the polygon 6 such that they can rotate together. The mirror pair 9 is pressed against the cam by a spring 904 through a pin 904a. When the polygon 6 rotates, this cam will push the mirror pair to swing around the axis of the shaft 902. The two scanning sub-fields to the bar code will also swing. A multiple-directional scanning pattern is then formed. The direction number depends on the number of facets.

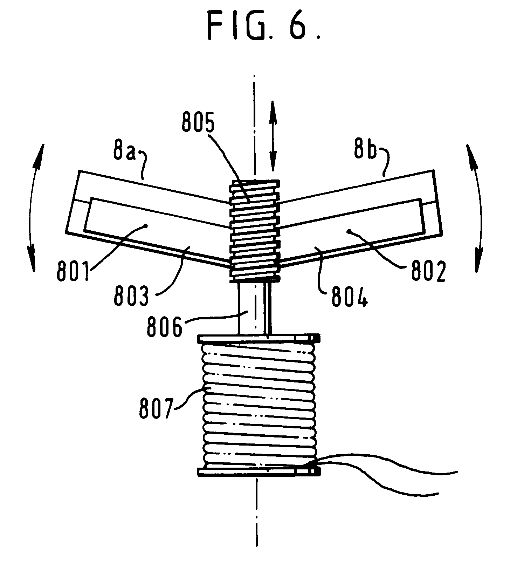

Another embodiment to produce space-invariant multiple-directional scanning pattern is to turn the mirror pairs 8a and 8b in the scanner shown in Fig. 6. Fig. 6 shows pairs of mirror 8a and 8b which can swing around the axes 801 and 802. The two axes are at the symmetrical axes of the sub-fields. The mirror pairs 8a an 8b are fixed to two rotation gears 803 and 804, respectively, which are coupled to a linear gear 805. The linear gear is fixed to a rod 806 which is surrounded by a coil 807. Feeding alternative current to the coil causes the rod to be moved to and fro, By means of the coupling of gears, the mirror pairs 8a and 8b will then swing in opposite directions.

## Claims

1. A bar coder reader that is arranged to generate a plurality of scanning lines on a bar code region where a bar code is to be detected and decoded comprising light source and collimation means (1, 2) for provision of a collimated light beam (A), scan beam deflection means (6) for deflection of the light beam to form a scanning beam at the bar code region, and dispersion means (8, 9) for causing the beam to fall on said bar code region as a plurality of lines, characterised in that the beam dispersion means comprises at least two separation beam deflection devices (8a, 8b) which are arranged to deflect the beam as it emerges from said scan beam deflection means as discrete separated beams, and at least one combining beam deflection device (9) which is arranged to combine the separated beams at the bar code region.

2. A bar code reader according to claim 1 in which each beam deflection device is formed by at least one mirror means.

3. A bar code reader according to claim 1 or 2, characterised in that said combining beam deflection device (9) comprises separate combining mirrors (9a, 9b) one for each separated beam, which combining mirrors are located so that the beams are combined so as to emerge as parallel lines at said bar code region.

4. A bar code reader according to claim 1 or 2, characterised in that said combining beam deflection device (9) is a single combining mirror which is arranged to cause the separated beams to emerge at said bar code region as crossed lines.

5. A bar code reader according to any of claims 2 to 4 in which each mirror means (8a, 8b, 9) is arranged as a pair of mirrors, the mirrors in each pair being located substantially perpendicular to each other.

6. A bar code reader according to claim 5, in which the pair of mirrors constituting the combining beam deflection device is arranged to rotate about an axis perpendicular to said combining mirror pair so as to provide rotation of the scanning lines at the bar code region.

7. A bar code reader according to claim 5, in which there are two separation beam deflection devices each being in the form of a pair of mirrors substantially at right angles to one another and that each pair of mirrors is arrange to rotate about an axis transverse to the respective mirror pair, so as to provide rotation of the scanning lines at the bar code region.
